# EUROPÄISCHE PATENTANMELDUNG

(11) **EP 4 806 596 A1**
(43) Veröffentlichungstag der Anmeldung: **16.09.2026**
(21) Anmeldenummer: 25162654.5
(22) Anmeldetag: 10.03.2025
(51) Int. Cl.: B25J 9/16

(54) **ROBOTERGESTÜTZTER TRANSPORT VON ARTIKELN**

(71) Anmelder: Swisslog AG, 5033 Buchs/Aarau (CH)
(72) Erfinder: HERBST, Rene, 45699 Herten (DE); PULTKE, Thorben, 47057 Duisburg (DE)
(74) Vertreter: Wallinger Ricker Schlotter PartGmbB

(57) **Zusammenfassung**

Ein Verfahren zum robotergestützten Transport von Artikeln (41-43) umfasst: Anfahren (S100) einer Aufnahmepose zum Aufnehmen eines Artikels mit einem Arbeitsroboter; Aufnehmen (S110) des Artikels mit dem Arbeitsroboter; Anfahren (S140) einer Abgabepose zum Abgeben des Artikels mit dem Arbeitsroboter; und Abgeben (S150) des Artikels mit dem Arbeitsroboter. Das Verfahren umfasst in einer Ausführung: Ermitteln (S130) einer Transportbewegung mithilfe eines, insbesondere wenigstens teilweise auf maschinellem Lernen basierenden, Modells auf Basis eines Ergebnisses wenigstens einer Erfassung (S120) des Artikels mittels einer optischen Sensoranordnung mit wenigstens einem optischen Sensor. Die Abgabepose wird mit der ermittelten Transportbewegung angefahren. Das Verfahren umfasst in einer Ausführung: Ermitteln (S130) einer Transportbewegung Die Erfindung betrifft außerdem ein Verfahren zum Trainieren des Modells sowie ein System bzw. Computerprogramm(produkt).

## Beschreibung

Die vorliegende Erfindung betrifft ein Verfahren und System zum robotergestützten Transport von Artikeln sowie ein Verfahren zum Trainieren eines Modells, insbesondere einer Datenverarbeitung, und ein Computerprogramm bzw. Computerprogrammprodukt hierfür.

Aufgabe der vorliegenden Erfindung ist es, den robotergestützten Transport von Artikeln zu verbessern.

Diese Aufgabe wird durch ein Verfahren mit den Merkmalen des Anspruchs 1 bzw. 11 gelöst. Anspruch 9 stellt ein Verfahren zum Trainieren eines Modells, insbesondere einer Datenverarbeitung, für einen erfindungsgemäßen Transport von Artikeln unter Schutz, Ansprüche 12, 13 ein System bzw. Computerprogramm bzw. Computerprogrammprodukt zur Durchführung eines hier beschriebenen Verfahrens. Die Unteransprüche betreffen vorteilhafte Weiterbildungen.

Nach einer Ausführung der vorliegenden Erfindung umfasst ein Verfahren zum Transport von Artikeln mit einem (den jeweiligen Artikel beim Transport haltenden) Roboter, der daher vorliegend als Arbeitsroboter bezeichnet wird, ("robotergestützter Transport") die Schritte:
- Anfahren einer Aufnahmepose zum Aufnehmen eines Artikels mit einem bzw. durch einen Arbeitsroboter;
- Aufnehmen des Artikels mit dem Arbeitsroboter;
- Anfahren einer Abgabepose zum Abgeben des Artikels mit dem Arbeitsroboter; und
- Abgeben des Artikels mit dem Arbeitsroboter.

Ein hier genannter Roboter weist in einer Ausführung einen Roboterarm und/oder eine stationäre oder mobile Basis auf. In einer Ausführung weist ein hier genannter Roboter, in einer Weiterbildung sein Roboterarm, wenigstens drei, insbesondere wenigstens sechs, Gelenke bzw. (Bewegungs)Achsen und Antriebe zum Verstellen dieser Gelenke bzw. Achsen auf. Die transportierten Artikel können insbesondere zu kommissionierende Artikel sein und/oder aus einem Behälter aufgenommen werden, in dem sie in einer Weiterbildung geordnet oder, in einer besonders vorteilhaften Weiterbildung, ungeordnet vorliegen bzw. angeliefert werden. Ein Aufnehmen eines Artikels mit einem Roboter umfasst in einer Ausführung ein Greifen bzw. reib- und/oder formschlüssiges Halten des Artikels mit dem Roboter, in einer Weiterbildung einem Greifer des Roboters, in einer Ausführung einem mechanischen Greifer, Vakuumgreifer, Magnetgreifer oder dergleichen. Für diese Applikationen ist die vorliegende Erfindung aufgrund ihrer Randbedingungen, insbesondere Roboterdynamik, Artikelvielfalt und Artikelbeschaffenheit, Transportwegen und dergleichen, besonders vorteilhaft.

Nach einer Ausführung der vorliegenden Erfindung umfasst das Verfahren den, in einer Weiterbildung wenigstens teilweise noch vor Verlassen der Aufnahmepose bzw. vorab und/oder wenigstens teilweise während des Anfahrens der Abgabepose bzw. on-the-fly durchgeführten, Schritt:
- Ermitteln einer Transportbewegung zum Anfahren der Abgabepose, in einer Weiterbildung von der Aufnahmepose zu der Abgabepose, mithilfe eines Modells, insbesondere eines numerischen bzw. Computermodells, in einer Weiterbildung einer wenigstens teilweise auf maschinellem Lernen basierenden Datenverarbeitung, auf Basis eines Ergebnisses wenigstens einer Erfassung des Artikels mittels einer Sensoranordnung mit wenigstens einem optischen Sensor, die daher als optische Sensoranordnung bezeichnet wird;
wobei die Abgabepose mit der ermittelten Transportbewegung angefahren wird.

Dem liegt die Idee zugrunde, anhand einer optischen Erfassung des zu transportierenden Artikels eine für diesen geeignete Transportbewegung mithilfe eines (numerischen bzw. Computer)Modells, bevorzugt eines entsprechend trainierten bzw. maschinell gelernten (KI-)Modells bzw. einer entsprechend ( trainiert)en Datenverarbeitung. zu ermitteln, um den Transport zu verbessern. Die Transportbewegung wird vorzugsweise derart bzw. mit der Maßgabe ermittelt, dass sie einerseits einen möglichst raschen Transport ermöglicht, was mit entsprechend hohen Beschleunigungen einhergeht, andererseits dabei die Bewegung, insbesondere Beschleunigungen, nicht zu einem, insbesondere trägheitsbedingten, Verlust des Artikels führen bzw. wenigstens die Häufigkeit bzw. Wahrscheinlichkeit hierfür reduzieren. Allgemein umfasst in einer Ausführung ein Trainieren eines/-r bzw. des/.r wenigstens teilweise auf maschinellem Lernen basierenden Modells bzw. Datenverarbeitung ein Trainieren bzw. maschinelles, in einer Weiterbildung nicht-überwachtes, überwachtes oder teilweise überwachtes, Lernen ("(non-supervised/supervised/semi-supervised) machine learning"), insbesondere Parametrieren bzw. Modifizieren, eines (numerischen bzw. Computer)Modells des maschinellen Lernens bzw. eines KI-Models und/oder die wenigstens teilweise auf maschinellem Lernen basierenden Datenverarbeitung ein bzw. das (numerische(s) bzw. Computer)Modell des maschinellen Lernens bzw. ein bzw. das KI-Model.

Besonders vorteilhaft ist es, wenn ohnehin eine optische Sensoranordnung zur Ermittlung eines aufzunehmenden Artikels und/oder zur Ermittlung einer Aufnahme des Artikels mit dem Arbeitsroboter, insbesondere (möglicher bzw. vorteilhafter) Kontaktstellen zwischen Artikel und Arbeitsroboter(greifer), verwendet wird, und diese optische Sensoranordnung bzw. eine Erfassung des Artikels durch diese dann erfindungsgemäß (zusätzlich auch) zur Ermittlung der Transportbewegung verwendet wird. Entsprechend umfasst in einer Ausführung das Verfahren zum robotergestützten Transport auch den Schritt:
- Ermitteln einer Soll-Aufnahme des Artikels mit dem Arbeitsroboter, insbesondere von Soll-Kontaktstellen zwischen Artikel und Arbeitsroboter(greifer), auf Basis eines Ergebnisses wenigstens einer Erfassung des Artikels mittels der optischen Sensoranordnung, in einer Weiterbildung ebenfalls mithilfe einer wenigstens teilweise auf maschinellem Lernen basierenden Datenverarbeitung.

(Der )Wenigstens ein(e) optische(r) Sensor der optischen Sensoranordnung ist in einer Ausführung an dem Arbeitsroboter angeordnet bzw. durch diesen geführt. Dadurch kann er besonders vorteilhaft positioniert werden und/oder sein Sichtfeld sich in vorteilhafter Weise mit dem Arbeitsroboter mitbewegen. In einer Ausführung ist alternativ der wenigstens eine optische(r) Sensor der optischen Sensoranordnung oder zusätzlich wenigstens ein weiterer optischer Sensor der optischen Sensoranordnung ein stationärer Sensor, wodurch der Arbeitsroboter entlastet und/oder beweglicher werden kann. Ein hier genannter optischer Sensor kann insbesondere eine oder mehrere Kameras und/oder ein(e) Bildauswertung(smittel) bzw. Bildverarbeitung(smittel) umfassen, wodurch vorteilhaft besonders signifikante bzw. spezifische Ergebnisse einer Erfassung des Artikels zum Ermitteln der Transportbewegung verwendet werden können. Entsprechend kann ein Ergebnis einer Erfassung des Artikels mittels der optischen Sensoranordnung insbesondere eine Bildauswertung bzw. Bildverarbeitung umfassen und/oder dem, in einer Ausführung wenigstens teilweise auf maschinellem Lernen basierenden, Modell bzw. der wenigstens teilweise auf maschinellem Lernen basierenden Datenverarbeitung bzw. deren Modell als Eingang zugeführt werden.

In einer Ausführung umfasst das Ermitteln einer Transportbewegung ein Ermitteln einer Soll-Geschwindigkeit und/oder Soll-Beschleunigung, in einer Weiterbildung bezüglich einer (bereits, insbesondere geoemtrisch) vorgegebenen Transportbahn, mithilfe des Modells bzw. der Datenverarbeitung. Da besonders Geschwindigkeiten und ganz besonders Beschleunigungen maßgeblich einen Verlust des Artikels beim Transport bzw. das Risiko hierfür beeinflussen, kann durch das Ermitteln einer Soll-Geschwindigkeit und/oder Soll-Beschleunigung ein Verlust des Artikels bzw. die Häufigkeit bzw. Wahrscheinlichkeit hierfür besonders vorteilhaft reduziert werden. Entsprechend kann die Datenverarbeitung bzw. das bzw. deren Modell entsprechende Soll-Geschwindigkeit(sparameter) und/oder Soll-Beschleunigung(sparameter) ausgeben. Durch ein Ermitteln einer Soll-Geschwindigkeit und/oder Soll-Beschleunigung bezüglich einer (bereits) vorgegebenen Transportbahn kann in einer Ausführung vorteilhaft zweistufig zunächst eine kinematisch geeignete Transportbahn bzw. deren Form (geometrisch) vorgegeben werden, in einer Weiterbildung mithilfe einer Bahnplanung und/oder Kollisionsvermeidung und/oder bzw. mithilfe eines (weiteren), vorzugsweise wenigstens teilweise auf maschinellem Lernen basierenden Modells, insbesondere einer (weiteren) wenigstens teilweise auf maschinellem Lernen basierenden Datenverarbeitung, und dann eine Soll-Geschwindigkeit und/oder Soll-Beschleunigung für diese Transportbahn derart bzw. mit der Maßgabe ermittelt werden, dass sie einerseits einen möglichst raschen Transport ermöglicht und andererseits dabei die Bewegung, insbesondere Beschleunigungen, nicht zu einem, insbesondere trägheitsbedingten, Verlust des Artikels führen bzw. wenigstens die Häufigkeit bzw. Wahrscheinlichkeit hierfür reduzieren. Hierdurch können Transportbahn und Soll-Geschwindigkeit bzw. Soll-Beschleunigung jeweils besonders vorteilhaft, insbesondere schnell(er), effizient(er) und/oder robust(er), ermittelt bzw. geplant werden.

**In** einer Ausführung umfasst das Ermitteln einer Transportbewegung (auch) ein Ermitteln einer (Geometrie einer) Transportbahn bzw. von deren Form mithilfe des Modells, insbesondere der Datenverarbeitung. Dadurch kann vorteilhaft eine Transportbewegung einstufig mithilfe eines, vorzugsweise wenigstens teilweise auf maschinellem Lernen basierenden, Modells, insbesondere einer wenigstens teilweise auf maschinellem Lernen basierenden Datenverarbeitung, und damit insbesondere variabler und/oder (ganzheitlich) optimiert ermittelt bzw. geplant werden.

**In** einer Ausführung hängt das Ergebnis der Erfassung des Artikels mittels der optischen Sensoranordnung von einer Gestalt des Artikels und/oder von einer Oberflächenbeschaffenheit, insbesondere Farbe, Reflektion oder dergleichen, des Artikels und/oder einem Kennzeichner des Artikels, in einer Weiterbildung einer für den individuellen Artikel oder den Typ des Artikels spezifischen ID**,** beispielsweise einem graphischen Code oder dergleichen, ab. Durch diese mittels der optischen Sensoranordnung erfassten optischen Merkmale des Artikels kann insbesondere ein(e) wenigstens teilweise auf maschinellem Lernen basierende(s) Modell bzw. Datenverarbeitung eine geeignete bzw. vorteilhafte Transportbewegung besonders vorteilhaft ermitteln. Dem Kennzeichner sind in einer Ausführung Daten, vorzugsweise Trägheitsdaten, Oberflächendaten wie beispielsweise Rauheiten oder dergleichen, und/oder Abmessungen, des Artikels zugeordnet, beispielsweise in einem Artikelverwaltungssystem oder dergleichen, wobei das Ergebnis der Erfassung des Artikels diese Daten umfassen kann.

In einer Ausführung wird der Artikel wenigstens einmal mittels der optischen Sensoranordnung erfasst (und das Ergebnis dieser Erfassung(en) beim Ermitteln der Transportbewegung berücksichtig), bevor er mit dem Roboter aufgenommen wird. Dadurch kann vorteilhaft die Transportbewegung frühzeitig ermittelt und dadurch die Prozesszeit reduziert und/oder die Prozessstabilität bzw. Robustheit verbessert werden. In einer Ausführung umfasst das Verfahren zum robotergestützten Transport ein bzw. das, vorzugsweise dieses, Erfassen des Artikels mittels der optischen Sensoranordnung.

In einer Ausführung hängt das Ergebnis der Erfassung des Artikels von einer Aufnahme des Artikels mit dem Arbeitsroboter, insbesondere Kontaktstellen zwischen Artikel und Arbeitsroboter(greifer), ab. Da eine maximal mögliche Haltekraft zum Halten des Artikels während der (zu ermittelnden) Transportbewegung neben einer Größe und einem Gewicht des Artikels (die bzw. das insbesondere anhand einer erfassten Gestalt und/oder anhand eines erfassten Kennzeichners des Artikels abgeschätzt bzw. prognostiziert werden können) und einer Oberflächenbeschaffenheit des Artikels insbesondere von der Aufnahme des Artikels, insbesondere den Kontaktstellen zwischen Artikel und Arbeitsroboter(greifer), abhängt, kann ein, vorzugsweise wenigstens teilweise auf maschinellem Lernen basierendes, Modell, insbesondere eine wenigstens teilweise auf maschinellem Lernen basierenden Datenverarbeitung, hierdurch eine geeignete bzw. vorteilhafte Transportbewegung besonders vorteilhaft ermitteln.

In einer Ausführung wird, vorteilhafterweise wenigstens zur Erfassung einer Aufnahme des Artikels mit dem Arbeitsroboter, der (bereits) mit dem Arbeitsroboter aufgenommene bzw. gegriffene Artikel wenigstens einmal mittels der optischen Sensoranordnung erfasst (und das Ergebnis dieser Erfassung(en) beim Ermitteln der Transportbewegung berücksichtig). In einer Ausführung umfasst das Verfahren zum robotergestützten Transport ein bzw. das, vorzugsweise dieses, Erfassen des Artikels mittels der optischen Sensoranordnung.

**In** einer Ausführung ist das wenigstens teilweise auf maschinellem Lernen basierende Modell, in einer Weiterbildung die Datenverarbeitung, mittels eines hier beschriebenen Verfahrens trainiert, in einer Weiterbildung wird die Datenverarbeitung bzw. das bzw. deren Modell mittels eines hier beschriebenen Verfahrens trainiert bzw. umfasst das Verfahren zum robotergestützten Transport von Artikeln auch das (Verfahren zum) Trainieren der wenigstens teilweise auf maschinellem Lernen basierenden Datenverarbeitung bzw. des bzw. deren Modells.

Nach einer Ausführung der vorliegenden Erfindung umfasst ein bzw. das (Verfahren zum) Trainieren des wenigstens teilweise auf maschinellem Lernen basierenden (KI-)Modells, insbesondere der wenigstens teilweise auf maschinellem Lernen basierenden Datenverarbeitung bzw. deren KI-Modells, zum hier beschriebenen Ermitteln der Transportbewegung zum robotergestützten Transport von Artikeln die mehrfach wiederholte Schrittfolge:
- Anfahren einer Aufnahmepose zum Aufnehmen eines Artikels mit dem Arbeitsroboter oder einem, vorzugsweise mit dem Arbeitsroboter typ- bzw. baugleichen, Trainingsroboter;
- Aufnehmen dieses Artikels mit diesem (Arbeits- bzw. Trainings)Roboter; und
- Durchführen einer Transportbewegung von der Aufnahmepose zum Anfahren einer Abgabepose zum Abgeben des Artikels mit diesem (Arbeits- bzw. Trainings)Roboter;

Vorzugsweise werden bei zwei oder mehr dieser Schrittfolgen jeweils derselbe Artikel oder (typ)gleiche Artikel aufgenommen. Zusätzlich oder alternativ werden in einer Ausführung bei zwei oder mehr dieser Schrittfolge jeweils unterschiedliche bzw. verschieden(artige) Artikel bzw. Artikel unterschiedlichen Typs aufgenommen. Hierdurch kann das Modell bzw. die Datenverarbeitung besonders vorteilhaft trainiert werden.

Nach einer Ausführung der vorliegenden Erfindung umfassen diese zum bzw. beim Trainieren durchgeführten Schrittfolgen jeweils:
- Ermitteln von Lasten zwischen dem (Arbeits- bzw. Trainings)Roboter und dem durch diesen aufgenommenen Artikel mittels einer Lastsensoranordnung mit wenigstens einem Lastsensor während des Durchführens der Transportbewegung;
- Ermitteln von Ist-Roboterbewegungsparametern während des Durchführens der Transportbewegung und/oder Bereitstellen von Soll-Roboterbewegungsparametern der Transportbewegung; und
- Erfassung dieses Artikels mittels einer optischen Sensoranordnung mit wenigstens einem optischen Sensor;
wobei das Modell bzw. die Datenverarbeitung auf Basis:
- eines Ergebnisses der Erfassung des jeweiligen Artikels mittels der optischen Sensoranordnung;
- der ermittelten Ist-Roboterbewegungsparametern und/oder bereitgestellten Soll-Roboterbewegungsparametern; und
- der mittels der Lastsensoranordnung ermittelten Lasten zwischen diesem Artikel und diesem Roboter
für die mehrfach wiederholten Schrittfolge trainiert wird.

Eine Last kann eine Kraft in einer oder mehreren Richtungen und/oder ein Drehmoment in einer oder mehreren Richtungen umfassen, insbesondere sein. Entsprechend kann ein Lastsensor ein Kraft- und/oder Drehmoment-Sensor sein, in einer bevorzugten Ausführung ist er ein sechsachsiger Kraft-Drehmoment-Sensor. Vorzugsweise ist der Lastsensor zwischen einem distalen bzw. Werkzeugflansch des (Arbeits- bzw. Trainings)Roboters und dem durch den Roboter, insbesondere einen an diesem Werkzeugflansch angeordneten Greifer des Roboters, aufgenommenen bzw. gehaltenen Artikel angeordnet, in einer Weiterbildung zwischen Werkzeugflansch und Greifer.

Durch die(se) Lastsensoranordnung bzw. die durch diese ermittelten Lasten zwischen dem (Arbeits- bzw. Trainings)Roboter und dem durch diesen aufgenommenen Artikel kann vorteilhaft zuverlässig, präzise und/oder frühzeitig eine zu hohe Last und damit ein (drohender) Verlust des Artikels bzw. eine weggefallene bzw. zu niedrige Last und damit ein (erfolgter) Verlust des Artikels erkannt und dadurch die Transportbewegung derart bzw. mit der Maßgabe ermittelt werden, dass sie einerseits einen möglichst raschen Transport ermöglicht, was mit entsprechend hohen Beschleunigungen einhergeht, andererseits dabei die Bewegung, insbesondere Beschleunigungen, nicht zu einem, insbesondere trägheitsbedingten, Verlust des Artikels führen bzw. wenigstens die Häufigkeit bzw. Wahrscheinlichkeit hierfür reduzieren, wobei ein Verlust des Artikels von dem jeweiligen Artikel und der durchgeführten Transportbewegung abhängt, so dass das Modell bzw. die Datenverarbeitung, dem bzw. der zusätzlich zu den ermittelten Lasten (die einen (möglichen) Verlust indizieren), die Ergebnisse der optischen Erfassung des Artikels (die den Artikel bzw. dessen maßgebliche Parameter indizieren) und die ermittelten bzw. bereitgestellten Roboterbewegungsparametern (die die durchgeführte Transportbewegung indizieren) zugeführt werden, anhand dieser Eingangsdaten vorteilhaft zum Ermitteln einer Transportbewegung zum möglichst raschen Transport eines (mittels der optischen Sensoranordnung erfassten) Artikels ohne dessen Verlust bzw. unter Reduzierung eines Risikos eines solchen Verlustes trainiert werden kann.

Entsprechend kann beim bzw. zum Trainieren des Modells bzw. der Datenverarbeitung ein rascher(er) Transport positiv(er) und/oder eine Überschreitung einer zulässigen Aufnahme- bzw. Haltelast und/oder ein Verlust des Artikels bzw. eine dies indizierende Absinken der Aufnahme- bzw. Haltelast negativ gelabelt bzw. bewertet bzw. das Modell bzw. die Datenverarbeitung derart bzw. mit der Maßgabe trainiert werden, dass es bzw. sie unter Vermeidung eines Verlusts von Artikeln oder unter Reduzierung eines Risikos bzw. einer Häufigkeit eines Verlusts von Artikeln unter einen vorgegebenen Grenzwert eine Transportbewegung für einen (möglichst) raschen Transport ermittelt.

Roboterbewegungsparameter umfassen in einer Ausführung Roboterstellungen, in einer Weiterbildung Gelenk- bzw. Achsstellungen, und/oder Positionen und/oder Orientierungen einer roboterfesten Referenz, in einer Weiterbildung eines TCPs, eines virtuellen Haltepunkts, an dem durch den aufgenommenen Artikel induzierte bzw. bewirkte Lasten wirken, eines Greifers oder dergleichen, und/oder erste und/oder höhere Zeitableitungen hiervon, insbesondere also Gelenk- bzw. Achsgeschwindigkeiten und/oder -beschleunigungen und/oder translatorische und/oder rotatorische Geschwindigkeiten und/oder Beschleunigungen der roboterfesten Referenz(en).

**In** einer Ausführung wird die Schrittfolge wenigstens einmal mit dem Arbeitsroboter durchgeführt, wobei dabei die Lasten zwischen dem jeweiligen Artikel und dem Arbeitsroboter mittels einer Lastsensoranordnung mit wenigstens einem an dem Arbeitsroboter angeordneten Lastsensor ermittelt werden und dieser wenigstens eine Lastsensor zum bzw. beim robotergestützten Transport von Artikeln von dem Arbeitsroboter entfernt wird bzw. ist.

Zusätzlich oder alternativ wird in einer Ausführung die Schrittfolge wenigstens einmal mit dem Trainingsroboter durchgeführt, wobei dabei die Lasten zwischen dem jeweiligen Artikel und dem Trainingsroboter mittels einer Lastsensoranordnung mit wenigstens einem an dem Trainingsroboter angeordneten Lastsensor ermittelt werden und der Arbeitsroboter zum bzw. beim robotergestützten Transport von Artikeln keinen diesem wenigstens einen Lastsensor des Trainingsroboters entsprechenden, insbesondere an gleicher Stelle angeordneten, Lastsensor zum Ermitteln von Lasten zwischen dem Artikel und dem Arbeitsroboter aufweist. **In** einer Ausführung ist der vorgenannte an dem Trainingsroboter angeordneten Lastsensor zwischen einem Werkzeugflansch des Trainingsroboters und dem durch den Trainingsroboter, insbesondere einen an diesem Werkzeugflansch angeordneten Greifer des Trainingsroboters, aufgenommenen bzw. gehaltenen Artikel, angeordnet, in einer Weiterbildung zwischen Werkzeugflansch und Greifer, und/oder der Arbeitsroboter weist keinen zwischen einem Werkzeugflansch des Arbeitsroboters und einem an diesem Werkzeugflansch angeordneten Greifer des Arbeitsroboters angeordneten Lastsensor, in einer Weiterbildung keinen zwischen einem Werkzeugflansch des Arbeitsroboters und dem durch den Arbeitsroboter, insbesondere einen an diesem Werkzeugflansch angeordneten Greifer des Arbeitsroboters, aufgenommenen bzw. gehaltenen Artikel, angeordneten Lastsensor auf.

In einer Ausführung werden bei einer oder mehreren Schrittfolgen zum Trainieren des Modells bzw. der Datenverarbeitung Lasten zwischen dem jeweils aufgenommenen bzw. bewegten Artikel und dem diesen Artikel aufnehmenden bzw. bewegenden (Arbeits- bzw. Trainings)Roboter mittels wenigstens eines an diesem Roboter angeordneten Lastsensor ermittelt und beim robotergestützten Transportieren mit Ermitteln der Transportbewegung mithilfe des/.r (solcherart) trainierten Modells bzw. Datenverarbeitung diese Lasten nicht mittels an dem Arbeitsroboter angeordneten Lastsensoren ermittelt, vorzugsweise ist bzw. wird dieser Lastsensor entfernt bzw. bei dem Arbeitsroboter wenigstens zum robotergestützten Transportieren ein entsprechend( angeordnet)er Lastsensor nicht vorhanden.

Dadurch kann einerseits das Modell bzw. die Datenverarbeitung vorteilhaft, insbesondere schnell(er) und/oder robust(er), trainiert und andererseits der Kostenaufwand beim bzw. zum robotergestützten Transportieren durch Wegfall des Lastsensors reduziert werden.

In einer Ausführung werden beim Durchführen einer Transportbewegung wenigstens einer der Schrittfolgen ein oder mehrere Parameter der (dabei vom Roboter abgefahrenen bzw. transport) Trajektorie, in einer Weiterbildung eine Geschwindigkeit, des (Arbeits- bzw. Trainings)Roboters, mit dem der jeweilige Artikel aufgenommen ist, bis zu einem Verlust des Artikels durch diesen Roboter, vorzugsweise planmäßig bzw. gezielt, variiert, insbesondere (die Geschwindigkeit) erhöht. Mit anderen Worten wird ein- oder mehrfach ein Verlust des jeweiligen Artikels provoziert, um das Modell bzw. die Datenverarbeitung zum Ermitteln einer (maximal) raschen Transportbewegung zu trainieren.

Nach einer Ausführung der vorliegenden Erfindung umfasst ein Verfahren zum Transport von Artikeln mit einem Arbeitsroboter die Schritte:
- Anfahren einer Aufnahmepose zum Aufnehmen eines Artikels mit einem bzw. durch einen Arbeitsroboter;
- Aufnehmen des Artikels mit dem Arbeitsroboter;
- Anfahren einer Abgabepose zum Abgeben des Artikels mit dem Arbeitsroboter; und
- Abgeben des Artikels mit dem Arbeitsroboter,
wobei das Verfahren den während des Anfahrens der Abgabepose mehrfach wiederholten Schritt umfasst:
- Aktualisieren einer geplanten Transportbewegung zu(m Anfahren) der Abgabepose mithilfe eines Modells auf Basis eines Ergebnisses wenigstens einer Erfassung einer durch den Artikel bewirkten Last mittels wenigstens eines an dem Arbeitsroboter angeordneten Sensors;
wobei die Abgabepose mit der aktualisieren Transportbewegung angefahren wird.

Eine Transportbewegung im Sinne der vorliegenden Erfindung kann insbesondere eine Trajektorie, insbesondere eine (geometrische bzw. Form einer) Transportbahn, welche (ihrerseits) eine ein-, zwei- oder dreidimensionale Position und/oder eine ein-, zwei- oder dreidimensionale Orientierung eines Endeffektors des Arbeitsroboters oder entsprechende Achs- bzw. Gelenkstellungen, umfassen, insbesondere sein, kann, und/oder eine Geschwindigkeit und/oder Beschleunigung, insbesondere entlang bzw. längs einer solchen Transportbahn, umfassen, insbesondere sein.

Das vorgenannte Modell, mithilfe dessen die geplante Transportbewegung in einer Ausführung aktualisiert wird, ist vorzugsweise ein numerisches bzw. Computermodell und/oder prognostiziert einen Zustand des Arbeitsroboters und/oder des Artikels und besonders bevorzugt eine durch den Artikel bewirkte Last.

Eine durch den Artikel bewirkte Last ist in einer Ausführung eine (durch den Artikel bewirkte) am bzw. auf den Arbeitsroboter und/oder zwischen Artikel und Arbeitsroboter wirkenden Last. Wie bereits erwähnt umfasst ein Aufnehmen eines Artikels mit einem Roboter in einer Ausführung ein Greifen bzw. reib- und/oder formschlüssiges Halten des Artikels mit dem Roboter, in einer Weiterbildung einem Greifer des Roboters, in einer Ausführung einem mechanischen Greifer, Vakuumgreifer, Magnetgreifer oder dergleichen.

**In** einer besonders bevorzugten Ausführung wird das Modell und/oder die Prognose des Zustands des Arbeitsroboters und/oder des Artikels, insbesondere der Last, auf Basis des Ergebnisses der Erfassung der durch den Artikel bewirkten Last aktualisiert, vorzugsweise korrigiert bzw. adaptiert, und die geplante Transportbewegung auf Basis dieses Modells bzw. dieser Prognose aktualisieren

**In** einer Ausführung werden bei dieser Aktualisierung der Transportbewegung benutzervorgegebene Zwangsbedingungen, vorzugsweise eine Hindernisvermeidung, maximal( zulässige) Geschwindigkeiten und/oder Beschleunigungen, oder dergleichen, berücksichtigt.

Somit wird in einer Ausführung eine online-Erfassung der Last während des Anfahrens der Abgabepose und eine hierauf basierende, vorzugsweise prädikative bzw. prognostizierende ("predictive"), modellbasierte ("model-based") Aktualisierung der (bisher geplanten) Transportbewegung ("online trajectory planing") vorgeschlagen. Vorzugsweise wird die geplante Transportbewegung derart bzw. mit der Maßgabe aktualisiert, Oszillation des Artikels zu reduzieren, vorzugsweise zu minimieren.

Vorzugsweise wird der Aktualisierungsschritt mit einer Taktzeit von wenigstens 50 ms und/oder höchstens 200 ms wiederholt.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
- Mittel zum Anfahren einer Aufnahmepose zum Aufnehmen eines Artikels mit einem Arbeitsroboter;
- Mittel zum Aufnehmen des Artikels mit dem Arbeitsroboter;
- Mittel zum Ermitteln einer Transportbewegung mithilfe eines, in einer Ausführung wenigstens teilweise auf maschinellem Lernen basierenden, Modells, in einer Ausführung einer wenigstens teilweise auf maschinellem Lernen basierenden Datenverarbeitung, auf Basis eines Ergebnisses wenigstens einer Erfassung des Artikels mittels einer optischen Sensoranordnung mit wenigstens einem optischen Sensor,
- Mittel zum Anfahren der Abgabepose zum Abgeben des Artikels mit dem Arbeitsroboter mit der ermittelten Transportbewegung; und
- Mittel zum Abgeben des Artikels mit dem Arbeitsroboter.

In einer Ausführung weist das System den Arbeitsroboter und/oder eine Steuerung zum Steuern des Arbeitsroboters und/oder den Trainingsroboter und/oder eine Steuerung zum Steuern des Trainingsroboters und/oder das bzw. eines oder mehrere der hier genannten Modell(e), in einer Ausführung die eine oder mehrere der hier genannten Datenverarbeitung(en), und/oder die zum robotergestützten Transport verwendete optische Sensoranordnung und/oder die zum Trainieren des Modells bzw. der Datenverarbeitung verwendete optische Sensoranordnung und/oder Lastsensoranordnung auf, wobei eines oder mehrere dieser Systemkomponenten, gegebenenfalls gemeinsam, eines oder mehrere der vorgenannten Mittel des Systems aufweisen bzw. bilden können.

Ein Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den robotergestützten Transport steuern bzw. planen und/oder das Modell bzw. die Datenverarbeitung trainieren kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen dieses Programms bzw. dieser Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. sein(e) Mittel.

Weitere Vorteile und Merkmale ergeben sich aus den Unteransprüchen und den Ausführungsbeispielen. Hierzu zeigt, teilweise schematisiert:
Fig. 1: ein System zum robotergestützten Transport von Artikeln nach einer Ausführung der vorliegenden Erfindung; und
Fig. 2: ein Verfahren zum robotergestützten Transport von Artikeln nach einer Ausführung der vorliegenden Erfindung;
Fig. 3: ein System zum robotergestützten Transport von Artikeln nach einer weiteren Ausführung der vorliegenden Erfindung; und
Fig. 4: ein Verfahren zum robotergestützten Transport von Artikeln nach einer weiteren Ausführung der vorliegenden Erfindung;.

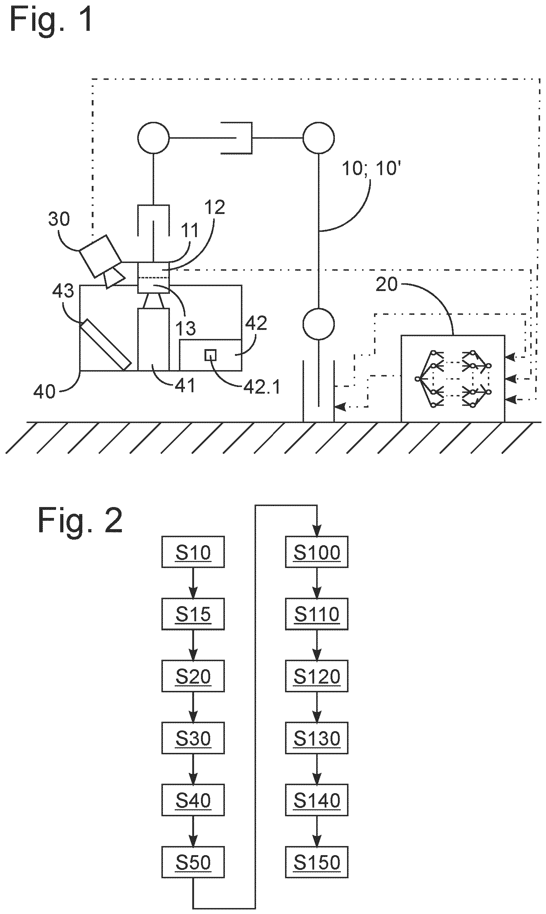

Fig. 1 zeigt ein System zum Transport von in einem Behälter 40 bereitgestellten Artikeln 41-43 mit einem Arbeitsroboter 10 nach einer Ausführung der
vorliegenden Erfindung, Fig. 2 ein Verfahren zum robotergestützten Transport von Artikeln nach einer Ausführung der vorliegenden Erfindung.

Zunächst wird ein wenigstens teilweise auf maschinellem Lernen basierendes Modell bzw. eine wenigstens teilweise auf maschinellem Lernen basierende Datenverarbeitung einer Robotersteuerung 20 trainiert. Dies kann Teil des erfindungsgemäßen Verfahrens zum robotergestützten Transport sein oder diesem vorangehen.

Zum Trainieren des Modells bzw. der Datenverarbeitung wird die folgende Schrittfolge mehrfach wiederholt:
**In** einem Schritt S10 wird eine Aufnahmepose zum Aufnehmen eines Artikels mit dem Arbeitsroboter 10 oder einem, in einer Ausführung baugleichen, Trainingsroboter 10' angefahren und einer der Artikel mit diesem Roboter aufgenommen (Schritt S15).
**In** einem Schritt S30 wird eine Transportbewegung von der Aufnahmepose in Richtung zu einer Abgabepose zum Abgeben des Artikels mit dem Roboter durchgeführt.

Während des Durchführens der Transportbewegung werden Lasten zwischen dem Artikel und dem Roboter mittels einer Lastsensoranordnung mit wenigstens einem Lastsensor 12, der zwischen einem Werkzeugflansch 11 des Roboters und dem Artikel angeordnet ist, sowie Ist-Roboterbewegungsparameter ermittelt. Zusätzlich oder alternativ zu einem Ermitteln von Ist-Roboterbewegungsparametern können auch Soll-Roboterbewegungsparameter bereitgestellt werden.

Vor, während und/oder nach dem Aufnehmen des Artikels wird dieser mittels einer optischen Sensoranordnung mit wenigstens einem optischen Sensor 30 erfasst, was in Fig. 2 durch den Schritt S20 symbolisiert ist. Wie gesagt kann Schritt S20 in einer Ausführung vor, während und/oder nach Schritt S15, insbesondere auch vor, während und/oder nach Schritt S10, durchgeführt werden.

Während und/oder nachdem diese Schrittfolge mehrfach wiederholt wird bzw. worden ist, wird das Modell bzw. die Datenverarbeitung auf Basis eines Ergebnisses der Erfassungen der Artikel mittels der optischen Sensoranordnung, der ermittelten bzw. bereitgestellten Roboterbewegungsparametern und der mittels der Lastsensoranordnung ermittelten Lasten zwischen den Artikeln und dem Roboter für die mehrfach wiederholten Schrittfolge trainiert, was in Fig. 2 durch den Schritt S40 symbolisiert ist.

Nachdem die Schrittfolge mehrfach wiederholt worden ist, kann der Lastsensor 12 vom Arbeitsroboter 10 entfernt werden (Fig. 2: Schritt S50). Gleichermaßen kann auch zum Trainieren der mit dem Lastsensor 12 ausgerüstete Trainingsroboter 10' und zum nachfolgend( beschrieben)en robotergestützten Transport von Artikeln der Arbeitsroboter 10 verwendet werden, der keinen entsprechenden Lastsensor zwischen Werkzeugflansch und robotergeführtem bzw. aufgenommenem Artikel aufweisen muss, zur Kostenersparnis vorteilhafterweise nicht aufweist.

Zum robotergestützten Transport von Artikeln wird mit dem Arbeitsroboter 10 eine Aufnahmepose zum Aufnehmen eines Artikels angefahren (Fig. 2: Schritt S100) und der Artikel mit dem Arbeitsroboter 10 aufgenommen (Fig. 2: Schritt S110), in einer Ausführung mit dem mechanischen, magnetischen oder pneumatischen bzw. Vakuumgreifer 13 des Arbeitsroboters 10 gegriffen.

Vor, während und/oder nach dem Aufnehmen des Artikels wird dieser (mittels der optischen Sensoranordnung) mit dem optischen Sensor 30 erfasst, was in Fig. 2 durch den Schritt S120 symbolisiert ist. Wie gesagt kann Schritt S120 in einer Ausführung vor, während und/oder nach Schritt S110, insbesondere auch vor, während und/oder nach Schritt S100, durchgeführt werden.

Auf Basis eines Ergebnisses dieser Erfassung(en) des Artikels (mittels der optischen Sensoranordnung) mit dem wenigstens einem optischen Sensor 30 wird in einem Schritt S130 mithilfe des/-r trainierten, wenigstens teilweise auf maschinellem Lernen basierenden Modells bzw. Datenverarbeitung der Robotersteuerung 20 eine Transportbewegung zum Anfahren einer Abgabepose, in einer Ausführung von der Aufnahmepose zu der Abgabepose, ermittelt.

In einem Schritt S140 wird diese Abgabepose zum Abgeben des Artikels mit dem Arbeitsroboter 10 mit der ermittelten Transportbewegung angefahren und in einem Schritt S150 der Artikel mit dem Arbeitsroboter abgegeben.

Dabei können Ergebnisse der Erfassung(en) des Artikels (mittels der optischen Sensoranordnung) mit dem wenigstens einem optischen Sensor 30, auf deren Basis das Modell bzw. die Datenverarbeitung der Robotersteuerung 20 die Transportbewegung ermittelt bzw. die dem Modell bzw. der trainierten Datenverarbeitung zugeführt werden, insbesondere von einer Gestalt und/oder Oberflächenbeschaffenheit und/oder einem Kennzeichner des Artikels und/oder einer Aufnahme des Artikels mit dem Arbeitsroboter abhängen. Zur Illustration sind in Fig. 1 Artikel unterschiedlicher Form (vgl. Artikel 41, 43) bzw. Artikel, die aufgrund ihrer Lage unterschiedlich aufgenommen werden (vgl. Artikel 41, 42) bzw. ein Kennzeichner 42.1 eines Artikels angedeutet, dem vorzugsweise Trägheitsdaten und/oder Abmessungen des Artikels zugeordnet sein können.

Das Ausführungsbeispiel illustriert insbesondere, dass vorteilhaft beim Trainieren des Modells bzw. der Datenverarbeitung während des Durchführens der Transportbewegung mittels einer Lastsensoranordnung 12 ermittelte Lasten zwischen dem Artikel und dem Roboter verwendet und beim robotergestützten Transport von Artikeln dann vorteilhaft auf dieses Ermitteln von Lasten und somit besonders vorteilhaft auf diese Lastsensoranordnung verzichtet werden kann, was die Kosten des Arbeitsroboters deutlich reduzieren kann. Mit anderen Worten lernt das Modell bzw. die Datenverarbeitung sozusagen, auf Basis der optischen Erfassung eines Artikels eine Transportbewegung zu ermitteln, bei der der den Artikel führende Roboter den Artikel nicht verliert bzw. das Risiko hierfür reduziert ist, ohne dass die einen solchen Verlust beeinflussenden Lasten zum Transportieren aufwändig mittels Lastsensoren ermittelt werden müssen, wobei solche Lastsensoren jedoch zum Trainieren verwendet werden und dieses, insbesondere dessen Dauer und/oder Robustheit, und/oder die Qualität (der Ergebnisse) des/-r trainierten Modells bzw. Datenverarbeitung deutlich verbessern können.

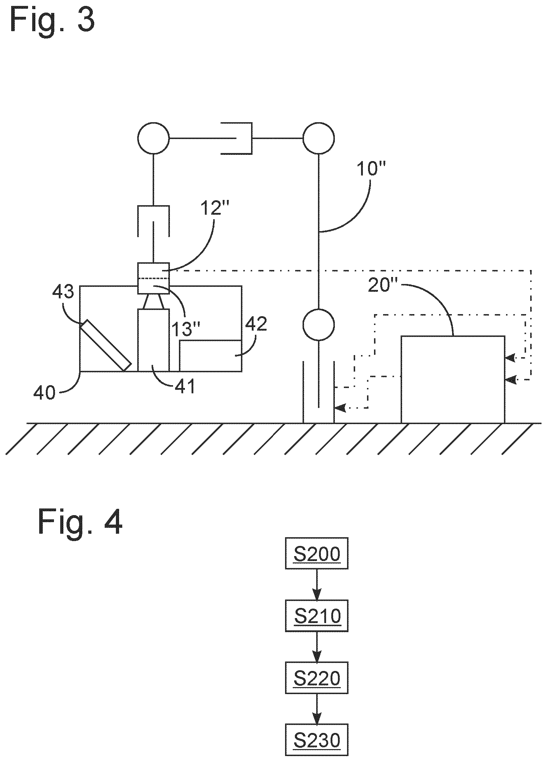

Fig. 3 zeigt ein System zum Transport von in einem Behälter 40 bereitgestellten Artikeln 41-43 mit einem Arbeitsroboter 10" nach einer weiteren Ausführung der vorliegenden Erfindung, Fig. 4 ein Verfahren zum robotergestützten Transport von Artikeln nach einer weiteren Ausführung der vorliegenden Erfindung.

Zum robotergestützten Transport von Artikeln wird mit dem Arbeitsroboter 10" eine Aufnahmepose zum Aufnehmen eines Artikels angefahren (Fig. 4: Schritt S200) und der Artikel mit dem Arbeitsroboter 10" aufgenommen (Fig. 4: Schritt S210), in einer Ausführung mit dem mechanischen, magnetischen oder pneumatischen bzw. Vakuumgreifer 13" des Arbeitsroboters 10" gegriffen.

Dann wird eine Abgabepose angefahren (Fig. 4: Schritt S220) und der aufgenomme Artikel abgegeben (Fig. 4: Schritt S230),

Während dieses Transports wird in einer Steuerung 20" zyklisch, beispielsweise mit einer Taktzeit von 100 ms oder auch einer höheren oder niedrigeren Taktzeit, eine geplante Transportbewegung zum Anfahren der Abgabepose mithilfe eines Modells auf Basis eines Ergebnisses wenigstens einer Erfassung einer durch den Artikel bewirkten Last mittels eines Lastsensors 12"eine geplanten Transportbewegung zu der Abgabepose aktualisiert. Dabei wird online eine prädikative modellbasierte Trajketorienplanung durchgeführt, wobei mithilfe des Modells jeweils eine durch den Artikel bewirkte Last bzw. dadurch bewirkte Oszillationen prognostiziert und die Trajketorienplanung unter Berücksichtigung benutzervorgegebener Zwangsbedingungen und unter bzw. zur Reduzierung der Oszillationen durchgeführt wird.

Diese Ausführung illustriert einerseits nochmals den Vorteil der Ausführung der Fig. 1, 2, da dort der Lastsensor 12" nicht erforderlich ist, andererseits den Ansatz einer prädikativen und modellbasierten online-Trajketorien(um)planung.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Arbeitsroboter
- 10': Trainingsroboter
- 10": Arbeitsroboter
- 11: Werkzeugflansch
- 12: Lastsensor
- 12": Lastsensor13 Greifer
- 13": Greifer
- 20: Steuerung
- 20": Steuerung
- 30: Kamera (optische(r) Sensor(anordnung)
- 40: Behälter
- 41-43: Artikel
- 42.1: Kennzeichner

## Patentansprüche

1. Verfahren zum robotergestützten Transport von Artikeln (41-43) mit den Schritten:
- Anfahren (S100) einer Aufnahmepose zum Aufnehmen eines Artikels mit einem Arbeitsroboter;
- Aufnehmen (S110) des Artikels mit dem Arbeitsroboter;
- Anfahren (S140) einer Abgabepose zum Abgeben des Artikels mit dem Arbeitsroboter; und
- Abgeben (S150) des Artikels mit dem Arbeitsroboter;
wobei das Verfahren den Schritt umfasst:
- Ermitteln (S130) einer Transportbewegung mithilfe eines, insbesondere wenigstens teilweise auf maschinellem Lernen basierenden, Modells auf Basis eines Ergebnisses wenigstens einer Erfassung (S120) des Artikels mittels einer optischen Sensoranordnung mit wenigstens einem optischen Sensor;
wobei die Abgabepose mit der ermittelten Transportbewegung angefahren wird.

2. Verfahren nach Anspruch 1, **dadurch gekennzeichnet, dass** das Ermitteln einer Transportbewegung ein Ermitteln einer Soll-Geschwindigkeit und/oder Soll-Beschleunigung, insbesondere bezüglich einer vorgegebenen Transportbahn, mithilfe des Modells umfasst.

3. Verfahren nach Anspruch 1, **dadurch gekennzeichnet, dass** das Ermitteln einer Transportbewegung ein Ermitteln einer Transportbahn mithilfe des Modells umfasst.

4. Verfahren nach einem der vorhergehenden Ansprüche, **dadurch gekennzeichnet, dass** das Ergebnis der Erfassung des Artikels von einer Gestalt und/oder Oberflächenbeschaffenheit und/oder einem Kennzeichner des Artikels abhängt.

5. Verfahren nach einem der vorhergehenden Ansprüche, **dadurch gekennzeichnet, dass** der Artikel wenigstens einmal mittels der optischen Sensoranordnung erfasst wird, bevor er mit dem Roboter aufgenommen wird.

6. Verfahren nach einem der vorhergehenden Ansprüche, **dadurch gekennzeichnet, dass** das Ergebnis der Erfassung des Artikels von einer Aufnahme des Artikels mit dem Arbeitsroboter abhängt.

7. Verfahren nach einem der vorhergehenden Ansprüche, **dadurch gekennzeichnet, dass** der mit dem Arbeitsroboter aufgenommene Artikel wenigstens einmal mittels der optischen Sensoranordnung erfasst wird.

8. Verfahren nach einem der vorhergehenden Ansprüche, **dadurch gekennzeichnet, dass** das Modell mittels eines Verfahrens nach einem der nachfolgenden Ansprüche trainiert ist oder wird.

9. Verfahren zum Trainieren des, wenigstens teilweise auf maschinellem Lernen basierenden Modells zum Ermitteln der Transportbewegung zum robotergestützten Transport von Artikeln nach einem der vorhergehenden Ansprüche, das die mehrfach wiederholte Schrittfolge umfasst:
- Anfahren (S10) einer Aufnahmepose zum Aufnehmen eines Artikels mit dem Arbeitsroboter oder einem Trainingsroboter;
- Aufnehmen (S15) des Artikels mit diesem Roboter;
- Durchführen (S30) einer Transportbewegung von der Aufnahmepose zum Anfahren einer Abgabepose zum Abgeben des Artikels mit diesem Roboter;
wobei diese Schrittfolgen jeweils umfassen:
- Ermitteln (S30) von Lasten zwischen dem Artikel und diesem Roboter während des Durchführens der Transportbewegung mittels einer Lastsensoranordnung mit wenigstens einem Lastsensor;
- Ermitteln (S30) von Ist-Roboterbewegungsparametern während des Durchführens der Transportbewegung und/oder Bereitstellen von Soll-Roboterbewegungsparametern der Transportbewegung; und
- Erfassung (S20) des Artikels mittels einer optischen Sensoranordnung mit wenigstens einem optischen Sensor;
wobei das Modell auf Basis eines Ergebnisses der Erfassung des jeweiligen Artikels mittels der optischen Sensoranordnung, der ermittelten und/oder bereitgestellten Roboterbewegungsparametern und der mittels der Lastsensoranordnung ermittelten Lasten zwischen diesem Artikel und diesem Roboter für die mehrfach wiederholten Schrittfolge trainiert wird (S40).

10. Verfahren nach dem vorhergehenden Anspruch, **dadurch gekennzeichnet, dass**:
- die Schrittfolge wenigstens einmal mit dem Arbeitsroboter durchgeführt wird, wobei dabei die Lasten zwischen dem jeweiligen Artikel und dem Arbeitsroboter mittels einer Lastsensoranordnung mit wenigstens einem an dem Arbeitsroboter angeordneten Lastsensor ermittelt werden und dieser wenigstens eine Lastsensor zum robotergestützten Transport von Artikeln von dem Arbeitsroboter entfernt wird; und/oder
- die Schrittfolge wenigstens einmal mit dem Trainingsroboter durchgeführt wird, wobei dabei die Lasten zwischen dem jeweiligen Artikel und dem Trainingsroboter mittels einer Lastsensoranordnung mit wenigstens einem an dem Trainingsroboter angeordneten Lastsensor ermittelt werden und der Arbeitsroboter zum robotergestützten Transport von Artikeln keinen diesem wenigstens einen Lastsensor des Trainingsroboters entsprechenden Lastsensor zum Ermitteln von Lasten zwischen dem Artikel und dem Arbeitsroboter aufweist; und/oder
- beim Durchführen einer Transportbewegung wenigstens einer der Schrittfolgen wenigstens ein Parameter der Trajektorie, insbesondere eine Geschwindigkeit, des Roboters, mit dem der jeweilige Artikel aufgenommen ist, bis zu einem Verlust des Artikels durch den Roboter variiert, insbesondere erhöht, wird.

11. Verfahren zum robotergestützten Transport von Artikeln (41-43) mit den Schritten:
- Anfahren (S200) einer Aufnahmepose zum Aufnehmen eines Artikels mit einem Arbeitsroboter;
- Aufnehmen (S210) des Artikels mit dem Arbeitsroboter;
- Anfahren (S220) einer Abgabepose zum Abgeben des Artikels mit dem Arbeitsroboter; und
- Abgeben (S230) des Artikels mit dem Arbeitsroboter;
wobei das Verfahren den während des Anfahrens der Abgabepose mehrfach wiederholten Schritt umfasst:
- Aktualisieren einer geplanten Transportbewegung zu der Abgabepose mithilfe eines Modells auf Basis eines Ergebnisses wenigstens einer Erfassung einer durch den Artikel bewirkten Last mittels wenigstens eines an dem Arbeitsroboter angeordneten Sensors;
wobei die Abgabepose mit der aktualisieren Transportbewegung angefahren wird.

12. System zum robotergestützten Transport von Artikeln, das zur Durchführung eines Verfahrens nach einem der vorhergehenden Ansprüche eingerichtet ist und/oder aufweist:
- Mittel zum Anfahren einer Aufnahmepose zum Aufnehmen eines Artikels mit einem Arbeitsroboter;
- Mittel zum Aufnehmen des Artikels mit dem Arbeitsroboter;
- Mittel zum Ermitteln einer Transportbewegung mithilfe eines, insbesondere wenigstens teilweise auf maschinellem Lernen basierenden, Modells auf Basis eines Ergebnisses wenigstens einer Erfassung des Artikels mittels einer optischen Sensoranordnung mit wenigstens einem optischen Sensor,
- Mittel zum Anfahren der Abgabepose zum Abgeben des Artikels mit dem Arbeitsroboter mit der ermittelten Transportbewegung; und
- Mittel zum Abgeben des Artikels mit dem Arbeitsroboter.

13. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 12 den oder die Computer oder das System dazu veranlassen, ein Verfahren nach einem der Ansprüche 1 bis 11 durchzuführen.
